(19) Europäisches Patentamt
European Patent Office
Office européen des brevets

(11) **EP 3 165 670 A1**

(12) **EUROPEAN PATENT APPLICATION**
published in accordance with Art. 153(4) EPC

(43) Date of publication:
**10.05.2017 Bulletin 2017/19**

(51) Int Cl.:
*D07B 1/18* (2006.01)          *B29D 30/48* (2006.01)
*B60C 15/04* (2006.01)          *D07B 1/06* (2006.01)

(21) Application number: **15814664.7**

(22) Date of filing: **22.06.2015**

(86) International application number:
**PCT/JP2015/067906**

(87) International publication number:
**WO 2016/002566 (07.01.2016 Gazette 2016/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **03.07.2014 JP 2014137729**

(71) Applicants:
• **Sumitomo Electric Industries, Ltd.**
  **Osaka-shi, Osaka 541-0041 (JP)**
• **Sumitomo Electric Tochigi Co., Ltd.**
  **Utsunomiya-shi, Tochigi 321-3231 (JP)**
• **Chrysanthemum Co., Ltd.**
  **Kaizuka-shi, Osaka 597-0093 (JP)**

(72) Inventors:
• **SANO, Yuichi**
  **Itami-shi**
  **Hyogo 664-0016 (JP)**

• **WAKAHARA, Hitoshi**
  **Utsunomiya-shi**
  **Tochigi 321-3231 (JP)**
• **KIKUGAWA Naoki**
  **Kaizuka-shi**
  **Osaka 597-0093 (JP)**
• **KIKUGAWA Hisashi**
  **Kaizuka-shi**
  **Osaka 597-0093 (JP)**
• **MITA Tadashi**
  **Kaizuka-shi**
  **Osaka 597-0093 (JP)**
• **NAGATA Yoshikazu**
  **Kaizuka-shi**
  **Osaka 597-0093 (JP)**

(74) Representative: **Boult Wade Tennant**
**Verulam Gardens**
**70 Gray's Inn Road**
**London WC1X 8BT (GB)**

(54) **CABLE BEAD AND METHOD FOR MANUFACTURING SAME**

(57) To provide a cable bead capable of reducing manufacturing time and harder to generate uneven twisting and a method for manufacturing the same.

Specifically, there is provided a coreless ring-shaped cable bead 1 in which a single strand 2 crimped so as to have a 1 x m1 x d1 single-twisted structure or a m2 x n x d2 double-twisted structure is wound into a spiral-shaped gap part for storing (m1 - 1) or (m2 - 1) crimped strands having the above structure and is wound by m1 or m2 turns.

[Fig.1]

**Description**

Technical Field

The present invention relates to a cable bead for use in a vehicle tire and a method for manufacturing the same.

Background Art

Conventionally, there is known a method in which a large-diameter filament made of soft steel is formed into a ring-shaped member and, after then, with the ring-shaped member as a core, a small-diameter filament is wound around the periphery of the core, thereby manufacturing a cable bead. However, in this method, the number of winding turns of the small-diameter filament is large to thereby increase the cable bead manufacturing time. In view of this, the patent document 1 proposes a cable bead having no core. That is, in the patent document 1, a single steel filament is formed into a ring-shaped member and the ring-shaped filament is wound multiple times and twisted together, thereby manufacturing a cable bead. Thus, the diameter of a single filament used as a so-called 1 x n single-twisted structure can be increased and the number of filament winding turns can be reduced accordingly, thereby enabling inexpensive manufacture of a cable bead.

The patent document 2 discloses a cable bead manufacturing method in which a soft-steel filament is used as an inner core and a crimped small-diameter filament is spirally wound around it to thereby form a cable bead. That is, the previously crimped small-diameter filament having a radius at least more than double the radius of the ring-shaped core is wound around the soft-steel filament serving as the core. This method can provide a stiff cable bead.

Prior Art Document

Patent Document

   Patent Document 1: JP-A-H09-273088
   Patent Document 2: JP-A-H07-68662

Disclosure of the Invention

Problems that the Invention is to Solve

In the method of the patent document 1, since the single large-diameter filament is not crimped, particularly, the small-diameter filament formed first in a ring shape tends to provide a core line not a side line and may have a core-equipped 1 + (m-1) structure not a coreless 1 x m structure, which takes time to correct it, thereby increasing manufacturing cost.

In the method of the patent document 2, when a crimped small-diameter filament is wound around the core, since the crimped portion of the small-diameter filament is caught by the core, uneven twisting is easy to occur, thereby causing uneven winding and thus causing a space for the last winding to disappear.

Here, although it is expected that, when the diameter-direction crimping height of the small-diameter filament is reduced, winding can be performed smoothly, it is difficult to maintain even and stable crimping height.

Means for Solving the Problems

Thus, the present invention has an object to provide a cable bead capable of reducing manufacturing time and hard to cause uneven twisting, and a method for manufacturing the same.

The present invention provides a coreless ring-shaped cable bead, wherein a single strand crimped so as to have a 1 x m1 x d1 single-twisted structure or a m2 x n x d2 double-twisted structure is wound into a spiral-shaped gap part for storing (m1 - 1) or (m2 - 1) number of crimped strands having the above structure and is wound m1 or m2 times of twists. Here, the number of twists, m1, m2 and n satisfy the following equation: that is, $3 \leq m1 \leq 5$, $3 \leq m2 \leq 5$, $2 \leq n \leq 5$, and n=7(1+6), 11(3+8) or 12(3+9), where m1: number of twists in the single-twisted structure, d1: diameter of filament constituting the single-twisted structure, m2: number of final twists in the double-twisted structure, n: number of primary twists in the double-twisted structure, and d2: diameter of filament constituting the double-twisted structure.

Here, in the present invention, the double-twisted structure includes two kinds of twisting, that is, primary twisting (performed primarily) and final twisting (performed secondarily).

The present invention provides a method for manufacturing a cable bead, comprising the steps of: supplying multiple filaments to a twisting machine and, after the strand is adjusted by a pre-forming device and/or a post-forming device to have a diameter formed ratio of 89 ~ 101%, twisting them together to produce an original cord; untwisting the original cord by the strands and winding the crimped strands one by one around the winding axis of a bobbin; discharging part of one of the crimped (formed) strands from the bobbin to form a one-turn loop, and provisionally restricting the leading end of the single crimped strand to the loop; twistingly rotating the bobbin around an axis crossing the winding axis in the same direction of the spiral rotation direction of the crimped strand when the loop is viewed from the bobbin to discharge the single crimped strand, and rotating the loop in the peripheral direction to wind the single discharged crimped strand into a spiral-shaped gap part with the other strand removed therefrom and winding it on the loop (the number of strands constituting the original cord - 1) times of turns; and, connecting together the starting and finishing ends of the strand.

Effects of the Invention

The present invention provides a cable bead capable of reducing manufacturing time and hard to cause uneven twisting, and a method for manufacturing the same.

Brief Description of Drawings

[Fig. 1] It is a perspective view of a cable bead according to an embodiment of the present invention.
[Fig. 2] It is a section view of the cable bead shown in Fig. 1.
[Fig. 3] It is a section view of an original cord for manufacturing a cable bead according to a reference example.
[Fig. 4] It is a typical view of the step of producing the original cord.
[Fig. 5] It is a typical view of the untwisting step.
[Fig. 6] It is a typical view of the loop forming step.
[Fig. 7] It is a typical view of the winding step.
[Fig. 8] It is a perspective view of part of a cable bead in the winding step.
[Fig. 9] It is a typical view of the finishing end connecting step.
[Fig. 10] It is an explanatory view of the diameter formed ratio.

Mode for Carrying Out the Invention

<Summary of Embodiment of the Invention>

Firstly, description is given of the summary of the embodiment of the present invention.
An embodiment of a cable bead according to the present invention provides (1) a coreless ring-shaped cable bead in which a single crimped strand crimped so as to constitute a 1 x m1 x d1 single-twisted structure or an m2 x n x d2 double-twisted structure is wound into a spiral-shaped gap part for storing (m1 - 1) or (m2 - 1) number of crimped strands constituting the above structure and is wound m1 or m2 times of turns.
Here, the number of twists, m1, m2 and n satisfy the following equations: $3 \leq m1 \leq 5$, $3 \leq m2 \leq 5$, $2 \leq n \leq 5$ and n = 7 (1 + 6), 11 (3 + 8) or 12 (3 + 9), where m1: number of twists in single-twisted structure, d1: diameter of filament constituting single-twisted structure, m2: number of final twists in double-twisted structure, n: number of primary twists in double-twisted structure, and d2: diameter of filament constituting double-twisted structure.
In the cable bead according to the structure of (1), the single crimped strand is wound into the spiral-shaped gap part for storing (m1 - 1) or (m2 - 1) number of crimped strands constituting the 1 x m1 x d1 single-twisted structure or the m2 x n x d2 double-twisted structure and is wound m1 or m2 times of turns. Thus, the crimped portions of the strands are hard to interfere with each other, thereby enabling production of a cable bead of less uneven twisting.
(2) In the double-twisted structure of the original cord, the diameter formed ratio of the strand given by the following equation may also be 89% to 101 %.
$\phi(\%) = Hs/Dc \times 100$, where $\phi$: diameter formed ratio(%) of the above strand, Hs: height(mm) of wave of the strand obtained when the original cord is no-load untwisted, and Dc: outside diameter (mm) of the original cord.
According to the structure of (2), there can be obtained a cable bead easy to manufacture and of less elongation.
(3) In the double-twisted structure of the original cord, the two ends of the single crimped strand may also be inserted into a cylindrical sleeve and connected together there.

According to the structure (3), the finishing end of the strand can be processed with a simple structure and the ends of the strand are prevented from damaging a tire.

An embodiment of a cable bead manufacturing method according to the present invention provides (4) a method, comprising the steps of: supplying multiple filaments to a twisting machine and, after the strand is adjusted by a pre-forming device and/or a post-forming device to have a diameter formed ratio of 89 ~ 101%, twisting them together to produce an original cord; untwisting the original cord by the strands and winding the crimped strands one by one around the winding axis of a bobbin; discharging part of one of the crimped strands from the bobbin to form a one-turn loop, and provisionally restricting the starting end of the single crimped strand to the loop; twistingly rotating the bobbin around an axis crossing the winding axis in the same direction of the spiral rotation direction of the crimped strand when the loop is viewed from the bobbin to discharge the single crimped strand, and rotating the loop in the peripheral direction to wind the single discharged crimped strand into a spiral-shaped gap part with the other strand removed therefrom and winding it on the loop (the number of strands constituting the original cord - 1) times of turns; and, connecting together the starting and finishing ends of the strand.

According to the structure of (4), a cable bead of less uneven twisting can be manufactured using a simple method.

<Details of embodiments of the Invention >

Description is given below of embodiments of a cable bead according to the present invention with reference to the drawings. Here, the present invention is not limited to the illustrated embodiments but contains all changes falling under the scope of the patent claims and falling within the meanings and ranges equivalent to the scope of the patent claims.

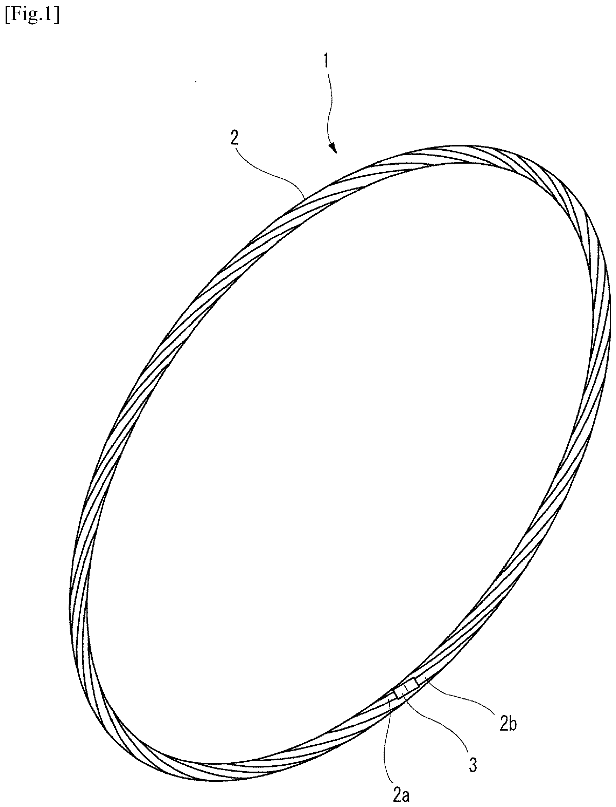

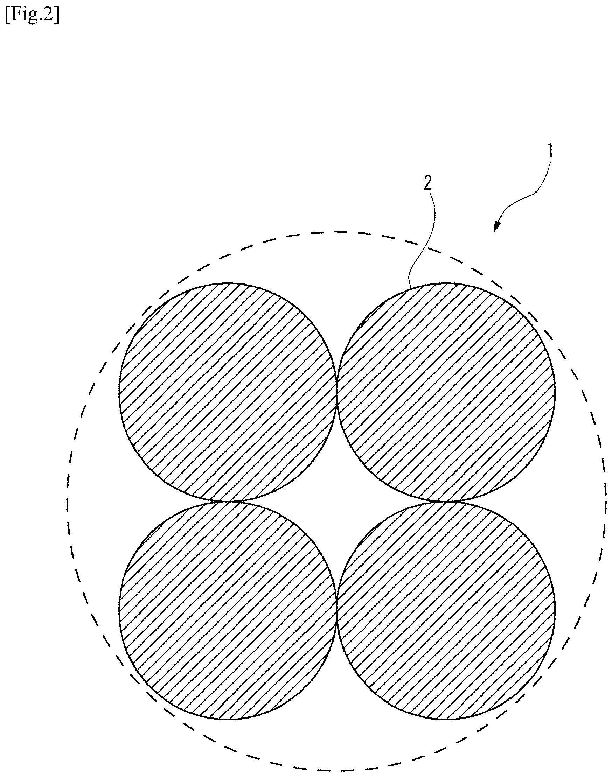

A cable bead 1 according to this embodiment is a coreless ring-shaped cable bead 1. Using Figs. 1 and 2, the cable bead 1 of this embodiment is described specifically. Fig. 1 is a perspective view of the cable bead 1 of this embodiment, and Fig. 2 is a sectional perspective view of the cable bead 1.

The illustrated cable bead 1 has a 1 x 4 x 1.20 single- twisted structure of m1 = 4 (twists) and d1 = 1.20 (mm). The cable bead 1 includes a single crimped strand 2 and a sleeve 3 with the two ends of the strand 2 inserted therein. The single strand 2 is wound four times of turns in a ring-shaped manner, thereby forming the cable bead 1. The cable bead 1, as shown in Fig. 2, includes four strands 2 in the radial-direction section thereof.

Here, the 1 x 4 x 1.20 single-twisted structure means that it includes four strands 2 each constituted of a single filament (steel wire) having a diameter of 1.20 mm.

In this cable bead 1, a single crimped strand member 2 crimped to constitute a 1 x 4 x 1.20 single-twisted structure is wound into a spiral-shaped gap part for storing three crimped strands 2 each crimped to constitute a 1 x 4 x 1.20 single-twisted structure and is wound four times of turns.

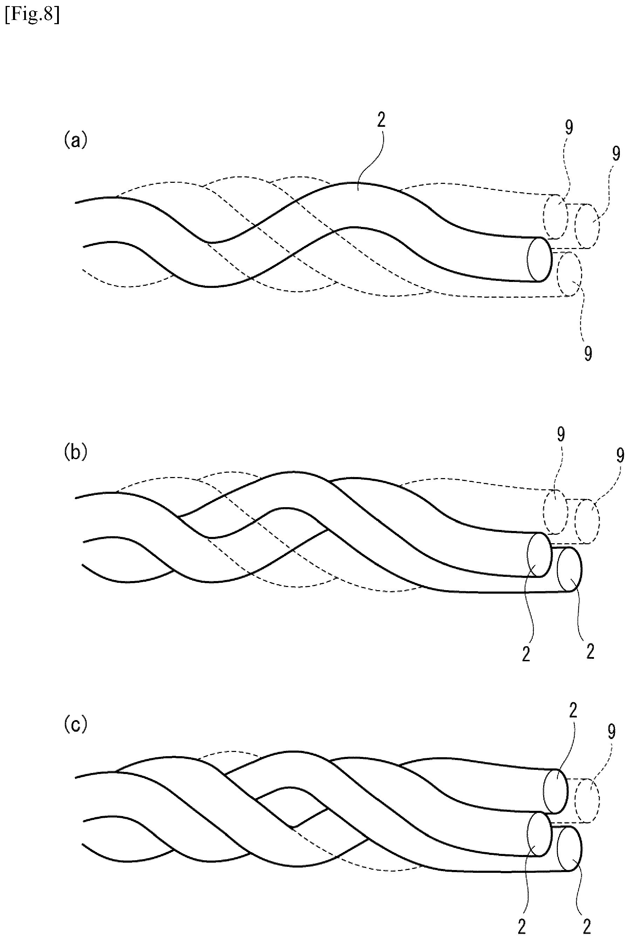

For example, 1) an original cord 4 having a 1 x 4 x 1.20 single-twisted structure is wound on a bobbin while untwisting it by the strands 2, 2) one of the strands 2 wound on the bobbin is pulled out, the starting end side thereof is formed into a specific loop and the tip end of the starting end side is provisionally restricted to the loop, and 3), then, while revolving the bobbin, the pulled-out strand is wound into a gap part 9 (see Fig. 8) from which other strand member 2 has been removed, thereby forming the cable bead 1.

Or, a filament is wound on a dummy bar and is crimped to constitute an original cord 4 having a 1 x 4 x 1.20 single- twisted structure, 2) it is untwisted to provide a single crimped strand 2 crimped to constitute a 1 x 4 x 1.20 single-twisted structure, and 3) the single crimped strand 2 is wound into a spiral-shaped gap part for storing three other crimped strands 2 each crimped to constitute a 1 x 4 x 1.20 single-twisted structure and is wound four times of turns, thereby being also able to form the cable bead 1.

The cable bead 1 of this embodiment is manufactured in such a manner that the strands 2 are each crimped into a spiral shape and are twisted together to form the original cord 4, the original cord 4 is untwisted by the respective strands 2, one of the untwisted strands 2 is used to produce a cable bead as if it had the same twist structure as the original cord 4, thereby enabling manufacture of the cable bead 1 by a simple method.

Also, when the original cord 3 is untwisted, the removal traces of the other strands 2 untwisted and removed are successively formed around the single strand 2 as the spiral-shaped gap parts 9. Also, the untwisted strands 2 are spirally crimped. Since the untwisted spiral-shaped strands 2 are wound into the spiral-shaped gap parts 9, the strands 2 are hard to interfere with each other, thereby reducing uneven twisting. Here, how to wind them spirally is described later specifically using Fig. 8.

In the cable bead 1 of this embodiment, the numbers of twists m1, m2 and n of the twisted structure of the original cord 4 satisfy the following equation (1), that is, $3 \leq m1 \leq 5$, $3 \leq m2 \leq 5$, $2 \leq n \leq 5$, and n = 7 (1+6), 11 (3+8) or 12 (13+9).

Here, n = 7 (1+6) shows a mode in which, in the section of the original cord 4, a single filament is arranged in the center and six filaments are arranged around it. Similarly, n = 11 (3+8) shows a mode in which, in the section of the original cord 4, three filaments are arranged in the center and eight filaments are arranged around them. And, n = 12 (3+9) shows a mode in which, in the section of the original cord 4, three filaments are arranged in the center and nine filaments are arranged around them.

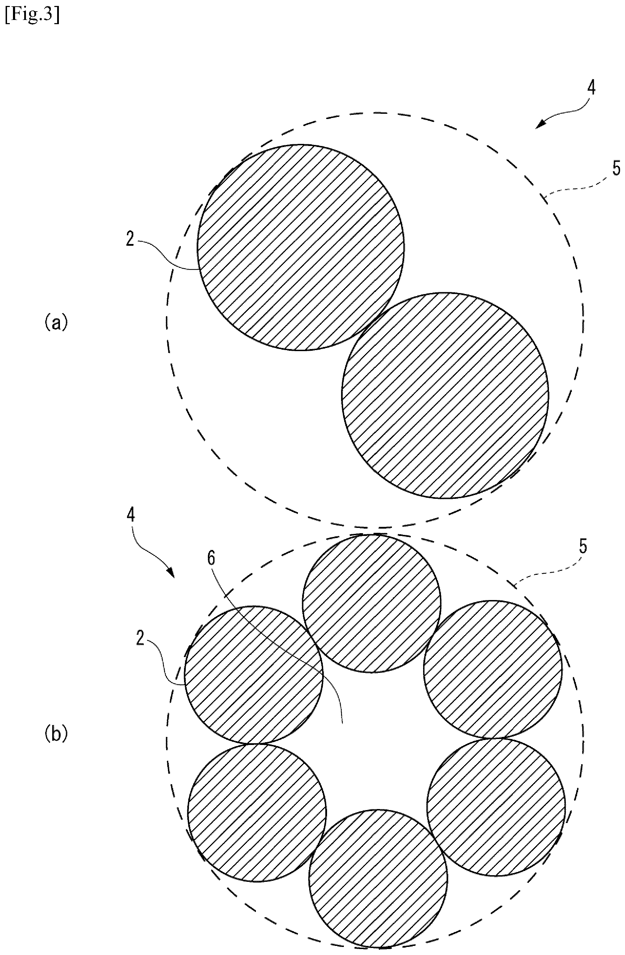

Fig. 3 is a section view of an original cord 4 according to a reference example. In Fig. 3, a solid line shows strands 4, while a broken line shows the substantial outer peripheral surface 5 of the original cord 4 constituted of the strands 2. The substantial outer peripheral surface 5 is a virtual surface obtained when the outer-most circumferential side portions of the strands 2 are connected together over the whole circumference of the cable bead 1.

For example, as shown in Fig. 3A, in an original cord constituted of two strands 2, there are locations where the outer circumferential surfaces of the strands 2 drop down toward the inside diameter side greatly from the substantial outer circumferential surface 5 of the original cord 4, thereby forming great uneven portions on the surface of the original cord 4. Since the section shape of a cable bead 1 provided by such original cord 4 is also substantially the same as that of the original cord 4, the uneven portions of the surface of the cable bead 1 produced from such original cord 4 become large. When this cable bead 1 is used in the bead part of a tire as a reinforcing member, uneven close contact occurs between the cable bead 1 and the rim of a tire wheel, thereby causing leakage of air.

Or, as shown in Fig. 3B, when six strands 2 exist in the section of the original cord 4, a large cavity 6 is formed in the center of the section. Thus, in twisting the original code 4, the strands 2 can enter the cavity 6, thereby causing uneven twisting.

However, in the cable bead 1 having a twisted structure satisfying the equation (1), large uneven portions are hard to occur in the surface and the cavity 6 is hard to be formed large in the central portion, whereby uneven twisting is hard to occur. Thus, uneven close contact is hard to occur between the cable bead 1 and tire wheel.

In this embodiment, as shown in Fig. 1, the starting end 2a and finishing end 2b of the single crimped strand 2 are inserted into a cylindrical sleeve 3 and are connected together. The sleeve 3, while allowing the slight movement of the starting and finishing ends 2a and 2b of the strand 2 in the longitudinal direction of the strand 2, restricts the movement thereof in the diameter direction of the strand 2.

When the two ends of the single strand 2 constituting the cable bead 1 are freely movable, there is a fear that, when the cable bead 1 is embedded in a tire, the two ends can break through the rubber of the tire. Use of the cylindrical sleeve 3 as a connecting tool can prevent this fear simply and inexpensively. And, since slight movement in the longitudinal direction is allowed, the cable bead 1 can be spread slightly in diameter, thereby enabling facilitation of mounting the cable bead 1 onto the wheel of the tire.

<Manufacturing Method>

Next, description is given of a method for manufacturing the above cable bead 1. The following description relates to a manufacturing method of the cable bead 1 to be manufactured from the original cord 4 having the 1 x 4 x 1.20 single-twisted structure.

<Original cord Producing Step>

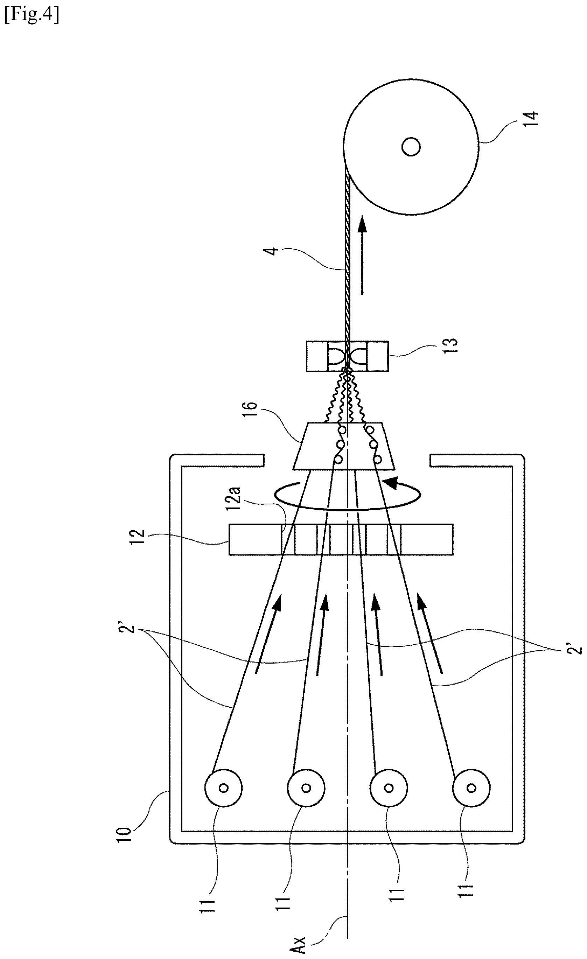

Fig. 4 is a typical view of a step of producing the original cord 4. As shown in Fig. 4, filaments 2' wound on bobbins 11 are discharged, are crimped spirally and are twisted together, thereby producing an original cord 4 having a 1 x 4 single-twisted structure. The filaments 2' wound on the bobbins 11 are non-crimped steel wires.

As shown in Fig. 4, the bobbins 11 with the filaments 2' wound thereon and a perforated board 12 are arranged within a cylindrical housing 10. The housing 10 is rotatable around a rotation axis Ax extending in the discharge direction of the filaments 2'. A twisting opening 13 and a winding bobbin 14 are arranged outside the housing 10.

While rotating the housing 10 around the rotation axis Ax and rotating the bobbins 11 and perforated board 12 integrally, the filaments 2' are discharged from the bobbins 11. The four filaments 2' discharged from the bobbins 11 are inserted through the four holes 12a of the perforated board 12 respectively. The four filaments 2' inserted through the holes 12a are gathered together in the twisting opening 13 and are crimped spirally and twisted together to thereby produce the original cord 4 having a 1 x 4 single-twisted structure; and, the original cord 4 is wound on the winding bobbin 14.

In this embodiment, before gathering in the twisting opening 13, the filaments are crimped by a preform device 16 so that the strand 2 can have a diameter formed ratio of 89% to 101%. The preform device 16 is interposed between the perforated board 12 and twisting opening 13 or between the bobbins 11 and perforated board 12. Here, instead of the preform device 16, or, in addition to the perform device 16, there may also be used a postform device, whereby the filaments may be crimped so that the strand 2 can have a diameter formed ratio of 89% to 101%. Or, previously crimped strands 2 may also be set on the bobbins 11.

Here, although the twisting of the original cord 4 may be performed by either a tubular-type twisting machine or a buncher type twisting machine, when residual torsion stability and twist stability are taken into consideration, the tubular-type twisting machine may preferably be chosen.

<Untwisting Step>

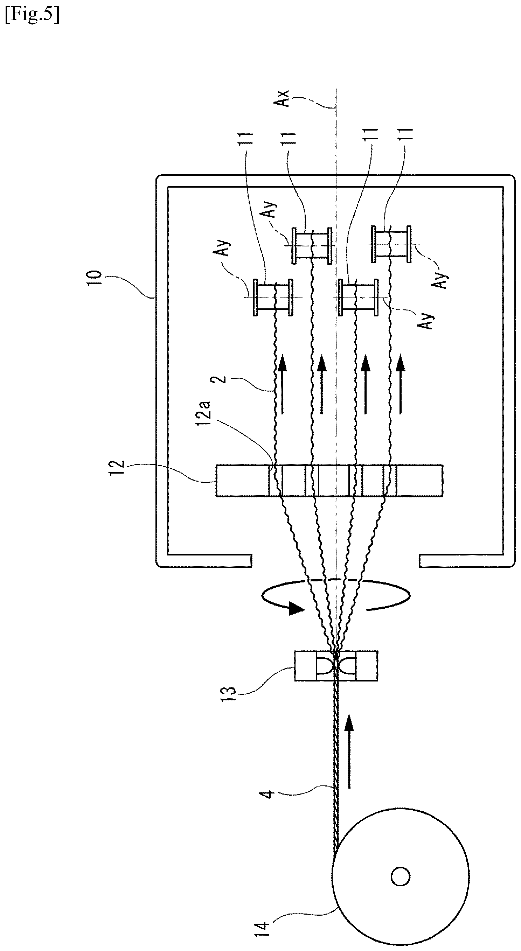

Fig. 5 is a typical view of an untwisting step. As shown in Fig. 5, the original cord 4 is untwisted by the strands 2 and the crimped strands 2 are wound one by one around the winding axis Ay of the bobbins 11, thereby providing the four spirally-crimped strands 2. In this example, the strands 2 are respectively constituted of a single filament 2'.
The untwisting step can be performed by reversing the upstream and downstream of the device used in the original cord producing step described in Fig. 4.
As shown in Fig. 5, the original cord 4 is discharged from the winding bobbins 14 and is inserted through the twisting opening 13 and the holes 12a of the perforated board 12. When the perforated board 12 and bobbins 11 are rotated integrally relative to the twisting opening 13, the four crimped strands 2 are separated from each other and are wound one by one around the winding axis Ay of the bobbins 11.
In the untwisting step, the bobbins 11 and perforated board 12 are rotated integrally around the rotation axis Ax extending in the discharge direction of the original cord 4. In this case, preferably, the strands 2 may be wound on the bobbins 11 with such low tension as can stretch the crimped strands 2 so that lowering of the diameter formed ratio can be limited to 2% or less.

(Loop Forming Step)

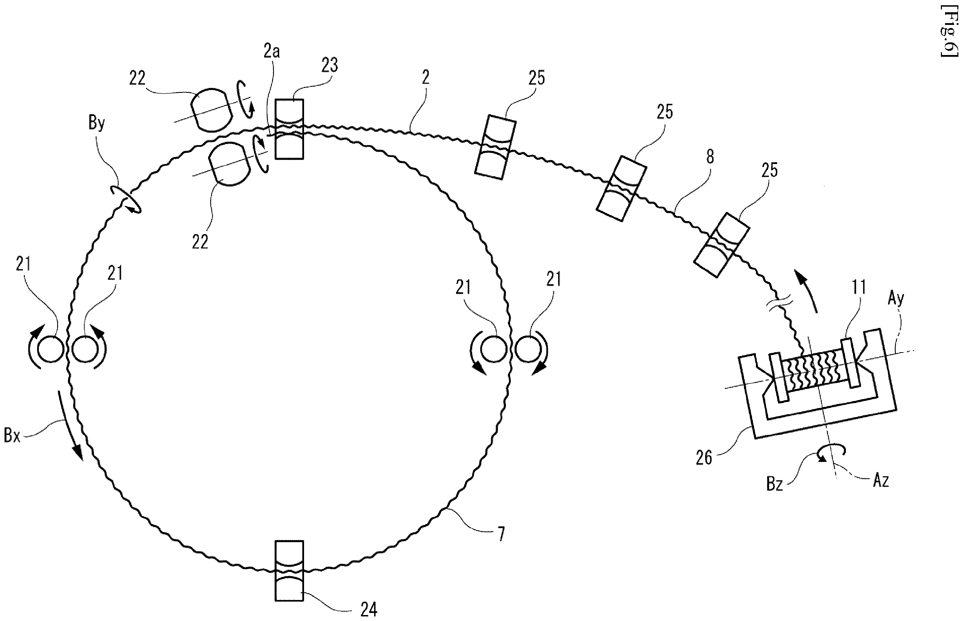

Fig. 6 is a typical view of a loop forming step. One crimped strand 2 is discharged by a necessary length from the bobbin 11, the leading end side portion thereof is rounded in a ring-like shape to form a first-turn loop 7, and the leading end 2a thereof is provisionally restricted to the loop 7 with tape, etc. A winding device 20 is described later specifically.

<Winding Step>

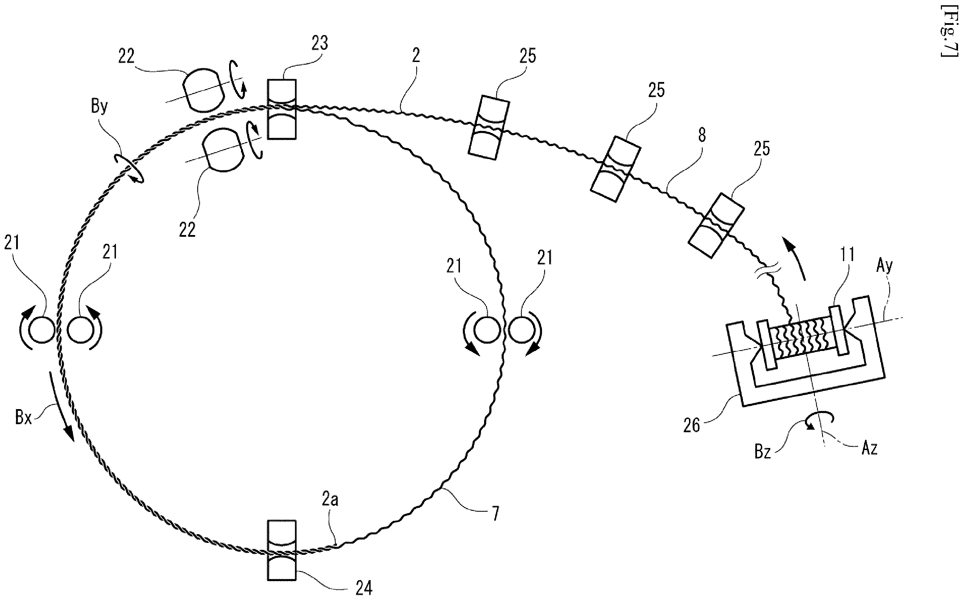

Fig. 7 is a typical view to show a state on the way of a winding step. In this winding step, the bobbin 11 is rotated around an axis crossing the winding axis Ay in the same direction By as the spirally rotating direction of the crimped strand 2 when the loop 7 is viewed from the bobbin 11 to torsionally discharge one crimped strand 2, and the loop 7 is rotated in the circumferential direction Bx to wind one discharged crimped strand 2 into a spiral-shaped gap with the other strand removed therefrom and wind it to the loop the (number of strands constituting the original cord 4 - 1) of turns. The details of this are described below.
This winding step can be performed using the winding device 20 shown in Figs. 6 and 7. The winding device 20, as shown in the figures, includes a first roller pair 21, a second roller pair 22, a winding guide 23, a ring shape maintaining guide 24, a strand guide 25 and a bobbin holder 26.
The first roller pair 21 is a pair of roller pairs. The first roller pair 21 is arranged at two locations on the circumference of the loop 7. The first roller pair 21 rotates around a rotation axis extending in the vertical direction of the figure sheet. The first roller pair 21 is contacted with the crimped strand 2 to rotate the loop 7 counterclockwise in the sheet. Here, in the following description, the rotation direction of the loop 7 to be rotated by the first roller pair 21 is called a first direction Bx.
The second roller pair 22 is a pair of roller pairs. The second roller pair 22 is arranged at a location on the circumference of the loop 7. The second roller pair 22 rotates around a rotation axis extending in the tangential direction of a point of contact with the crimped strand 2. The second roller pair 22 is contacted with the crimped strand 2 to rotate the crimped strand 2 constituting the loop 7 around an axis extending in the circumferential direction thereof. The second roller pair 22 rotates the loop 7 so that the inner and outer peripheral sides thereof are reversed. Here, in the following description, the rotation direction of the loop 7 to be rotated by the second roller pair 22 is called a second direction By.
The ring shape maintaining guide 24 is arranged between the two first roller pairs 21 on the circumference of the loop 7, has a hole therein capable of insertion of the crimped strand 2, and maintains the shape of the loop 7 while allowing the crimped strand 2 to rotate in the first and second directions Bx and By.
The winding guide 23 is also arranged on the circumference of the loop 7 at a position where an extra-length part 8 joins the loop 7, has a hole therein capable of insertion of the loop 7 and extra-length part 8, and allows the extra-length part 8 to join the loop 7. Here, the winding guide 23 also has the function of the ring shape maintaining guide 24.
The strand guide 25 guides the extra-length part 8 of the strand 2, has a hole therein capable of insertion of the extra-length part 8, and assists smooth winding of the strand 2 onto the loop 7 while allowing the crimped strand 2 to rotate in the first and second directions Bx and By.
The bobbin holder 26 holds the bobbin 11 rotatably, rotates the bobbin 11 around an axis Az crossing the winding axis Ay of the bobbin 11, and rotates the bobbin 11 in the same direction Bz as the spiral rotation direction of the crimped strand 2 when the loop 7 is viewed from the bobbin 11, thereby discharging the wound crimped strand 2 to the loop 7. For example, when the crimped strand 2 draws a spiral counterclockwise toward the loop 7 when the loop 7 is viewed from the bobbin 11, the bobbin holder discharges the crimped strand 2 while rotating the bobbin counterclockwise. Due to such rotation of the bobbin holder 26, the crimped strand 2 is discharged from the bobbin 11 while it is twisted such that its twisting is increased.

Using the thus structured winding device 20, the cable bead 1 is produced. Firstly, as shown in Fig. 6, the original cord 4 is untwisted and the bobbin 11 with one crimped strand 2 wound thereon is set on the bobbin holder 26. From the loop 7, there is extended the extra-length part 8 of the strand 2 not used to form the loop 7 but including such portion as is wound on the bobbin 11.

While rotating the bobbin holder 26 and bobbin 11 around the axes Ay, Az, the crimped strand 2 is torsionally reeled out from the bobbin 11; and, the loop 7 is rotated in the first and second directions Bx, By by the first and second roller pairs 21 and 22 and, while winding the one discharged crimped strand 2 into the spiral-shaped gap with the other strand removed therefrom, the strand 2 is wound on the loop 7 (the number of strands constituting the original cord 4 - 1) times of turns (in this example, three times of turns).

Fig. 8 shows how the extra-length part 8 is wound on the spiral-shaped gap 9 with the other strand 2 removed therefrom by the winding device 20. Fig. 8 is a partially enlarged perspective view of the loop 7. Fig. 8A shows the loop 7 formed when the strand 2 is wound once, Fig. 8B shows the state of a one-turn strand 2 wound on the loop 7, and Fig. 8C shows the state of a two-turn strand 2 wound on the loop 7.

Fig. 8A shows part of the loop 7 when the start end side portion of a crimped strand 2 provided by untwisting the original cord 4 is rounded into a ring shape and the strand 2 is wound one turn to thereby form the loop 7. As shown here, around the crimped strand 2, there are arranged three spiral-shaped gaps 9 which have been occupied by the three untwisted and removed strands 2.

As explained in Fig. 7, the bobbin 11 is rotated and, while rotating the loop 7 in the first and second directions Bx and By, the extra-length part 8 is inserted into the gap 9. Thus, as shown in Fig. 8B, the extra-length part 8 enters the gap 9 occupied by the untwisted and removed other one strand 2.

Further, the bobbin holder 26 is also rotated around the axis Az to rotate the crimped strand 2 around the axis Az and discharge it in a twisting increasing manner, whereby the rotation thereof in the second direction By by the second roller 22 is assisted. This can facilitate continuous winding of the extra-length part 8 of the strand 2 into the gap 9 with the other strand 2 removed therefrom.

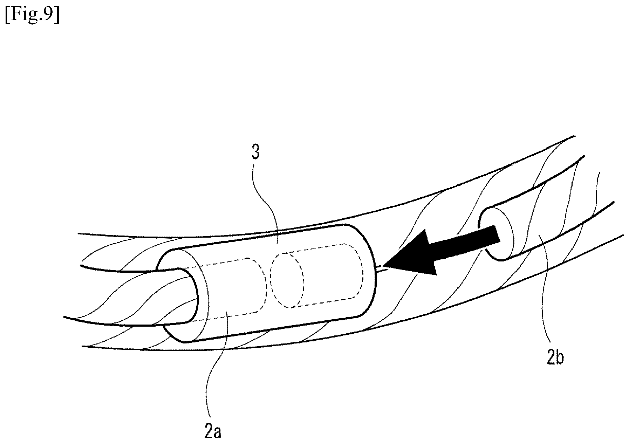

When the loop 7 is rotated one turn, as shown in Fig. 8C, the extra-length part 8 enters the gap 9 occupied by the other untwisted and removed strand 2. The extra-length part 8 is wound in this manner (number of strands constituting the original cord 4 - 1) times of turns. In this example, the strand 2 is wound one more turn from the state of Fig. 8C (in the illustrated example, a total of three times of turns), thereby advancing to the next connecting step of Fig. 9.

Since the shape (pitch and crimp height) of the crimped strand 2 is similar to that of the gap 9, the crimped strand 2 is easy to enter the gap 9 and the crimped strands 2 are hard to interfere with each other.

Fig. 9 shows the connecting step typically and is an enlarged perspective view of the start end 2a and terminal end 2b of the strand 2. As shown in Fig. 9, the finishing end 2b of the crimped strand 2 is connected to the starting end 2a thereof, thereby enabling production of a cable bead 1 having a 1 x 4 1.20 single-twisted structure.

Here, to produce a cable bead 1 having an m x n double-twisted structure, in the step of producing the original cord 4 of Fig. 4, the filament 2' to be discharged from the bobbin 11 may be replaced with a primary strand (1 x n) having an m x n double-twisted structure.

With the cable bead 1 manufacturing method according to the above embodiment, the cable bead 1 can be manufactured by a simple method in which one strand 2 obtained by untwisting the original cord 4 after produced is wound on the loop 7 while winding the extra-length part 8 into the gap 9. Also, since the strands 2 are crimped when producing the original cord 4, the strong cable bead 1 can be produced. Further, since the crimped portions of the strands are prevented from interfering with each other, the cable bead 1 with less uneven twisting can be produced.

In the above embodiment, description has been given of the example in which the bobbins 11 with the crimped strands 2 obtained in the untwisting step wound thereon are rotated to give twisting to the crimped strands 2 in a twisting applying direction, thereby winding the extra-length part 8 on the loop 7. However, the present invention is not limited to this. For example, after the crimped strands 2 are cut to specific lengths, the processing may advance to the loop forming step. Also, the above coreless cable bead can also be manufactured by a core-equipped cable bead manufacturing method disclosed, for example, in the patent document 2.

Here, the twist pitch of the original cord 4 may preferably be set large so long as the proper range (89% to 101%) of the diameter formed ratio can be adjusted easily. As the twist pitch increases, when obtaining the crimped strands 2 by untwisting the original cord 4, the winding speed can be increased, thereby enabling time reduction. Also, after a one-turn loop 7 is formed in order to obtain the cable bead 1, in the second and following windings as well, the number of windings per turn can be reduced, thereby enabling time reduction in winding. Depending on the diameter of the loop 7, the twist pitch of the original cord 4 may preferably be adjusted such that the number of windings per turn is 9 ~ 19.

In the original cord 4 producing process described in Fig. 4, when the original cord 4 has a double-twisted structure, the diameter formed ratio of the strand 2 provided by the following equation (2) may preferably be 89% ~ 101 %.

$$\phi(\%) = Hs/Dc \times 100\text{---------} \text{(equation 2)}$$

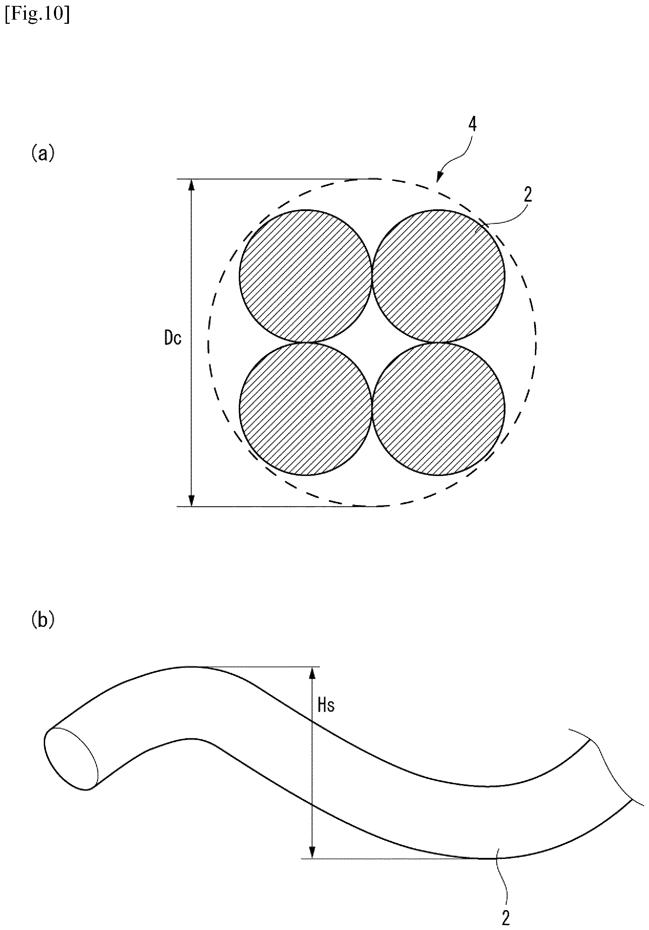

The diameter formed ratio $\phi$ (%) of the strand 2, as shown in Fig. 10, is expressed by the above equation (2), where Hs expresses the height(mm) of the wave of the strand 2 obtained by non-load untwisting the original cord 4 and Dc expresses the outside diameter(mm) of the original cord 4. As the diameter formed ratio increases, the shape of the strand 2 is easier to be maintained in the spiral shape of the original cord 4.

When the diameter formed ratio is less than 89%, in the winding step in Fig. 7, when the extra-length part 8 of one crimped strand 2 is inserted into the gap 9 with the other crimped strand 2 removed therefrom, there is a possibility that the last-turn winding cannot be secured. This tends to provide an incomplete cable bead 1 with one turn less than an ordinary cable bead.

Meanwhile, when the diameter formed ratio is more than 101%, although there is a gap sufficient for winding, a cable bead 1 having large elongation is produced and thus close contact power between the cable bead 1 and the rim of a tire wheel is lowered, thereby causing air leakage.

Thus, when the diameter formed ratio of the strand 2 is 89% ~ 101%, preferably, a cable bead is easy to produce and a cable bead of small elongation can be provided.

Cable beads according to embodiments 6-1 ~ 9-3, 11-1 ~ 15-3 by the manufacturing method of the above mode, cable beads according to comparison examples 1-1 ~ 5-3, 10-1 ~ 10~3, 16-1 ~ 17-3, and conventional cable beads according to the conventional manufacturing methods are manufactured and evaluated.

<Comparison Example 1-1> 1 x 2 x 2 coreless cable bead

(Production of Strand)

Element wires obtained by drawing a brass plated steel wire having a diameter of 8.0 mm and containing 0.7 mass% of C (carbon) to a diameter of 2.55 mm are wound on two bobbins. Using a tubular type twisting machine, the element wires, after their diameter formed ratios are adjusted to 93%, are twisted together by S twisting at the twist pitch of 50.0 mm, and are then wound on a winding bobbin, thereby producing an original cord.

As shown in Fig. 4, the respective strands are discharged from the winding bobbin with the original cord wound thereon and, while untwisting their finishing ends manually, are inserted through a perforated board and then are guided to bobbins. The crimped strands are wound on the bobbins by an untwisting device shown in Fig. 5, thereby providing two strands for producing a coreless cable bead.

(Production of Coreless Cable Bead)

One of the two strands provided by untwisting the original cord and wound on the bobbin is used. Using a winding device shown in Fig. 7, part of the strand is discharged from the bobbin to form a one-turn loop and the leading end of one discharged strand is provisionally restricted to the loop. Next, while rotating the bobbin holder and bobbin, the loop is rotated in the first and second directions to wind one discharged crimped strand into the spiral-shaped gap with the other strand removed therefrom, and is wound one turn on the loop. Further, the starting and finishing ends of the strand are connected together.

Thus, a 1 x 2 x 2.55 (1 x m1 x d1) coreless cable bead according to the comparison example 1-1 is produced.

<Comparison Example 2-1> 2 x 3 x 1.48 coreless cable bead

(Production of Strand)

Element wires obtained by drawing a brass plated steel wire having a diameter of 5.0 mm and containing 0.7 mass% of C up to a diameter of 1.48 mm are wound on three bobbins. Using a tubular type twisting machine, after adjusting their diameter formed ratios to 93%, they are twisted by Z twisting at a twist pitch of 35 mm, thereby producing primary strands.

The primary strands (1 x 3 x 1.48) are wound by a specific amount on two bobbins. Using the tubular type twisting machine again, after adjusting their diameter formed ratios to 91%, they are finally twisted by S twisting at a twist pitch of 65 mm, and an original cord is wound on the bobbin, thereby producing the original cord.

The respective strands are discharged from the winding bobbin with the original cord wound thereon and, while manually untwisting their finishing ends, they are passed through the perforated board and are guided to a bobbin. The crimped strands are wound on the bobbins by the untwisting device shown in Fig. 5, thereby providing two strands for producing a coreless cable bead.

(Coreless Cable Bead)

One of the two strands obtained by untwisting the original cord and wound on the bobbin is used. Using the winding device shown in Fig. 7, part of the strand is discharged from the bobbin to form a one-turn loop and the leading end of the discharged strand is provisionally restricted to the loop. Next, while rotating the bobbin holder and bobbin, the loop is rotated in the first and second directions to wind the discharged crimped strand into the spiral-shaped gap with the other strand removed therefrom and wind it on the one-turn loop. Further, the starting and finishing ends of the strand are connected together.

Thus, a 2 x 3 x 1.48 (m2 x n x d2) coreless cable bead according to the comparison example 2-1 is produced.

<Comparison Example 3-1> 2 x 4 x1.28 Coreless Cable Bead

(Production of Strand)

Element wires obtained by drawing a brass plated steel wire having a diameter of 4.2 mm and containing 0.7 mass% of C to a diameter of 1.28 mm are wound on four bobbins. Using a tubular type twisting machine, after adjusting their diameter formed ratios to 93%, they are twisted by Z twist at a twist pitch of 35 mm, thereby producing primary twisted materials.

The primary twisted materials (1 x 4 x 1.28) are wound by a specific amount on two bobbins. And, using the tubular type twisting machine again, after adjusting their diameter formed ratios to 91%, they are finally twisted by S twist at a twist pitch of 65 mm, and an original cord is wound on a winding bobbin, thereby producing the original cord.

The respective strands are discharged from the winding bobbin with the original cord wound thereon and, with their finishing ends untwisted manually, they are passed through the perforated board and are guided to a bobbin. The strands crimped by the untwisting device shown in Fig. 5 are wound on the bobbin, thereby providing two strands for producing a coreless cable bead.

(Coreless Cable Bead)

One of the two strands obtained by untwisting the original cord and wound on the bobbin is used. Using the winding device shown in Fig. 7, part of the strand is discharged from the bobbin to form a one-turn loop and the leading end of the discharged strand is provisionally restrained to the loop. Next, while rotating the bobbin holder and bobbin, the loop is rotated in the first and second directions to wind the discharged crimped strand into the spiral-shaped gap with the other strand removed therefrom and wind it on the one-turn loop. Further, the starting and finishing ends of the strand are connected together.

Thus, a 2 x 4 x 1.28 (m2 x n x d2) coreless cable bead according to the comparison example 3-1 is produced.

<Comparison Example 4-1> 2 x 5 x 1.15 Coreless Cable Bead

(Production of Strand)

Element wires obtained by drawing a brass plated steel wire having a diameter of 4.2 mm and containing 0.7 mass% of C to a diameter of 1.15 mm are wound on three bobbins. Using a tubular type twisting machine, after adjusting their diameter formed ratios to 92%, they are twisted by Z twist at a twist pitch of 38 mm.

The thus-produced primary twisted materials (1 x 5 x 1.15) are wound by a specific amount on two bobbins. And, using the tubular type twisting machine again, after adjusting their diameter formed ratios to 91%, they are finally twisted by S twist at a twist pitch of 50 mm, and an original cord is wound on the winding bobbin, thereby producing the original cord.

The respective strands are discharged from the winding bobbin with the original cord wound thereon and, with their finishing ends untwisted manually, they are passed through the perforated board and are guided to a bobbin. The strands crimped by the untwisting device shown in Fig. 5 are wound on the bobbin, thereby providing two strands for producing a coreless cable bead.

(Production of Coreless Cable Bead)

One of the two strands obtained by untwisting the original cord and wound on the bobbin is used. Using the winding device shown in Fig. 7, part of the strand is discharged from the bobbin to form a one-turn loop and the starting end of the discharged strand is provisionally restrained to the loop. Next, while rotating the bobbin holder and bobbin, the loop is rotated in the first and second directions to wind the discharged crimped strand into the spiral-shaped gap with the other strand removed therefrom and wind it on the one-turn loop. Further, the starting and finishing ends of the strand are connected together.

Thus, a 2 x 5 x 1.15 (m2 x n x d2) coreless cable bead according to the comparison example 4-1 is produced.

<Comparison Example 5-1> 2 x 7 x 0.97 Coreless Cable Bead

(Production of Strand)

Element wires obtained by drawing a brass plated steel wire having a diameter of 3.2 mm and containing 0.7 mass% of C to a diameter of 0.97 mm are wound on seven bobbins. Using a tubular type twisting machine, after adjusting their diameter formed ratios to 95%, they are twisted by Z twisting at a twist pitch of 40 mm.

The thus-produced primary twisted materials (1 x 7 x 0.97) are wound by a specific amount on two bobbins. And, using the tubular type twisting machine again, after adjusting their diameter formed ratios to 91%, they are finally twisted by S twisting at a twist pitch of 60 mm, and an original cord is wound on the winding bobbin, thereby producing the original cord.

The respective strands are discharged from the winding bobbin with the original cord wound thereon and, with their finishing ends untwisted manually, they are passed through the perforated board and are guided to a bobbin. The strands crimped by the untwisting device shown in Fig. 5 are wound on the bobbin, thereby providing two strands for producing a coreless cable bead.

(Production of Coreless Cable Bead)

One of the two strands obtained by untwisting the original cord and wound on the bobbin is used. Using the winding device shown in Fig. 7, part of the strand is discharged from the bobbin to form a one-turn loop and the starting end of the discharged strand is provisionally restrained to the loop. Next, while rotating the bobbin holder and bobbin, the loop is rotated in the first and second directions to wind the discharged crimped strand into the spiral-shaped gap with the other strand removed therefrom and wind it on the one-turn loop. Further, the starting and finishing ends of the strand are connected together.

Thus, a 2 x 7 x 0.97 (m2 x n x d2) coreless cable bead according to the comparison example 5-1 is produced.

<Embodiment 6-1> 1 x 3 x 2.10 Coreless Cable Bead

(Production of Strand)

Element wires obtained by drawing a brass plated steel wire having a diameter of 6.5 mm and containing 0.7 mass% of C to a diameter of 2.10 mm are wound on three bobbins. Using a tubular type twisting machine, after adjusting their diameter formed ratios to 95%, they are twisted by S twisting at a twist pitch of 50.0 mm and are wound on a bobbin, thereby producing an original cord.

The respective strands are reeled out from the winding bobbin with the original cord wound thereon and, with their finishing ends untwisted manually, they are passed through the perforated board and are guided to a bobbin. The strands crimped by the untwisting device shown in Fig. 5 are wound on the bobbin, thereby providing three strands for producing a coreless cable bead.

(Production of Coreless Cable Bead)

One of the three strands obtained by untwisting the original cord and wound on the bobbin is used. Using the winding device shown in Fig. 7, part of the strand is discharged from the bobbin to form a one-turn loop and the starting end of the discharged strand is provisionally restrained to the loop. Next, while rotating the bobbin holder and bobbin, the loop is rotated in the first and second directions to wind the discharged crimped strand into the spiral-shaped gap with the other strand removed therefrom and wind it on loop by two turns. Further, the starting and finishing ends of the strand are connected together.

Thus, a 1 x 3 x 2.10 (1 x m1 x d1) coreless cable bead according to the embodiment 6-1 is produced.

<Embodiment 7-1> 3 x 2 x1.48 Coreless Cable Bead

(Production of Strand)

Element wires obtained by drawing a brass plated steel wire having a diameter of 5.0 mm and containing 0.7 mass% of C to a diameter of 1.48 mm are wound on two bobbins. Using a tubular type twisting machine, after adjusting their diameter formed ratios to 95%, they are twisted by Z twisting at a twist pitch of 30 mm.

Further, the thus-produced primary twisted materials (1 x 2 x 1.48) are wound by a specific amount on three bobbins. And, using the tubular type twisting machine again, after adjusting their diameter formed ratios to 92%, they are finally stranded by S twisting at a twist pitch of 70 mm, and an original cord is wound on the winding bobbin, thereby producing the original cord.

The respective strands are discharged from the winding bobbin with the original cord wound thereon and, with their finishing ends untwisted manually, they are passed through the perforated board and are guided to a bobbin. The strands crimped by the untwisting device shown in Fig. 5 are wound on the bobbin, thereby providing three strands for producing a coreless cable bead.

(Production of Coreless Cable Bead)

One of the three strands obtained by untwisting the original cord and wound on the bobbin is used. Using the winding device shown in Fig. 7, part of the strand is discharged from the bobbin to form a one-turn loop and the starting end of the discharged strand is provisionally restrained to the loop. Next, while rotating the bobbin holder and bobbin, the loop is rotated in the first and second directions to wind the discharged crimped strand into the spiral-shaped gap with the other strand removed therefrom and wind it on the loop by two turns. Further, the starting and finishing ends of the strand are connected together.

Thus, a 3 x 2 x 1.48 (m2 x n x d2) coreless cable bead according to the embodiment 7-1 is produced.

<Embodiment 8-1> 3 x 3 x 1.2 Coreless Cable Bead

(Production of Strand)

Element wires obtained by drawing a brass plated steel wire having a diameter of 4.5 mm and containing 0.7 mass% of C to a diameter of 1.20 mm are wound on three bobbins. Using a tubular type twisting machine, after adjusting their diameter formed ratios to 92%, they are stranded by Z twisting at a twist pitch of 25 mm.

Further, the thus-produced primary twisted materials (1 x 3 x 1.20) are wound by a specific amount on three bobbins. And, using the tubular type twisting machine again, after adjusting their diameter formed ratios to 99%, they are finally twisted by S twisting at a twist pitch of 60 mm, and an original cord is wound on the winding bobbin, thereby producing the original cord.

The respective strands are discharged from the winding bobbin with the original cord wound thereon and, with their finishing ends untwisted manually, they are passed through the perforated board and are guided to a bobbin. The strands crimped by the untwisting device shown in Fig. 5 are wound on the bobbin, thereby providing three strands for producing a coreless cable bead.

(Production of Coreless Cable Bead)

One of the three strands obtained by untwisting the original cord and wound on the bobbin is used. Using the winding device shown in Fig. 7, part of the strand is discharged from the bobbin to form a one-turn loop and the starting end of the discharged strand is provisionally restrained to the loop. Next, while rotating the bobbin holder and bobbin, the loop is rotated in the first and second directions to wind the discharged crimped strand into the spiral-shaped gap with the other strand removed therefrom and wind it on the loop by two turns. Further, the starting and finishing ends of the strand are connected together.

Thus, a 3 x 3 x 1.2 (m2 x n x d2) coreless cable bead according to the embodiment 8-1 is produced.

<Embodiment 9-1> 3 x 4 x 1.05 Coreless Cable Bead

(Production of Strand)

Element wires obtained by drawing a brass plated steel wire having a diameter of 4.5 mm and containing 0.7 mass% of C to a diameter of 1.05 mm are wound on four bobbins. Using a tubular type twisting machine, after adjusting their diameter formed ratios to 94%, they are twisted by Z twisting at a twist pitch of 30 mm.

Further, the thus-produced primary twisted materials (1 x 4 x 1.05) are wound by a specific amount on three bobbins. And, using the tubular type twisting machine again, after adjusting their diameter formed ratios to 93%, they are finally twisted by S twisting at a twist pitch of 60 mm, and an original cord is wound on the winding bobbin, thereby producing the original cord.

The respective strands are discharged from the winding bobbin with the original cord wound thereon and, with their finishing ends untwisted manually, they are passed through the perforated board and are guided to a bobbin. The strands crimped by the untwisting device shown in Fig. 5 are wound on the bobbin, thereby providing three strands for producing a coreless cable bead.

(Production of Coreless Cable Bead)

One of the three strands obtained by untwisting the original cord and wound on the bobbin is used. Using the winding device shown in Fig. 7, part of the strand is discharged from the bobbin to form a one-turn loop and the starting end of the discharged strand is provisionally restrained to the loop. Next, while rotating the bobbin holder and bobbin, the loop is rotated in the first and second directions to wind the discharged crimped strand into the spiral-shaped gap with the other strand removed therefrom and wind it on the loop by two turns. Further, the starting and finishing ends of the strand are connected together.

Thus, a 3 x 4 x 1.05 (m2xnxd2) coreless cable bead according to the embodiment 9-1 is produced.

<Comparison Example 10-1> 3 x 6 x 0.85 Coreless Cable Bead

(Production of Strand)

Element wires obtained by drawing a brass plated steel wire having a diameter of 3.0 mm and containing 0.7 mass% of C to a diameter of 0.85 mm are wound on six bobbins. Using a tubular type twisting machine, after adjusting their diameter formed ratios to 91 %, they are twisted by Z twisting at a twist pitch of 33 mm.

Further, the thus-produced primary twisted materials (1 x 6 x 0.85) are wound by a specific amount on three bobbins. And, using the tubular type twisting machine again, after adjusting their diameter formed ratios to 96%, they are finally twisted by S twisting at a twist pitch of 60 mm, and an original cord is wound on the winding bobbin, thereby producing the original cord.

The respective strands are discharged from the winding bobbin with the original cord wound thereon and, with their finishing ends untwisted manually, they are passed through the perforated board and are guided to a bobbin. The strands crimped by the untwisting device shown in Fig. 5 are wound on the bobbin, thereby providing three strands for producing a coreless cable bead.

(Production of Coreless Cable Bead)

One of the three strands obtained by untwisting the original cord and wound on the bobbin is used. Using the winding device shown in Fig. 7, part of the strand is discharged from the bobbin to form a one-turn loop and the leading end of the discharged strand is provisionally restrained to the loop. Next, while rotating the bobbin holder and bobbin, the loop is rotated in the first and second directions to wind the discharged crimped strand into the spiral-shaped gap with the other strand removed therefrom and wind it on the loop by two turns. Further, the starting and finishing ends of the strand are connected together.

Thus, a 3 x 6 x 0.85 (m2 x n x d2) coreless cable bead according to the comparison example 10-1 is produced.

<Embodiment 11-1> 3 x 3 x 0.78 Coreless Cable Bead

(Production of Strand)

Element wires obtained by drawing a brass plated steel wire having a diameter of 2.6 mm and containing 0.7 mass% of C to a diameter of 0.78 mm are wound on seven bobbins. Using a tubular type twisting machine, after adjusting their diameter formed ratios to 97%, they are twisted by Z twisting at a twist pitch of 34 mm.

Further, the thus-produced primary twisted materials (1 x 7 x 0.78) are wound by a specific amount on three bobbins. And, using the tubular type twisting machine again, after adjusting their diameter formed ratios to 94%, they are finally twisted by S twisting at a twist pitch of 60 mm, and an original cord is wound on the winding bobbin, thereby producing the original cord.

The respective strands are discharged from the winding bobbin with the original cord wound thereon and, with their finishing ends untwisted manually, they are passed through the perforated board and are guided to a bobbin. The strands crimped by the untwisting device shown in Fig. 5 are wound on the bobbin, thereby providing three strands for producing a coreless cable bead.

(Production of Coreless Cable Bead)

One of the three strands obtained by untwisting the original cord and wound on the bobbin is used. Using the winding device shown in Fig. 7, part of the strand is discharged from the bobbin to form a one-turn loop and the starting end of the discharged strand is provisionally restrained to the loop. Next, while rotating the bobbin holder and bobbin, the loop is rotated in the first and second directions to wind the discharged crimped strand into the spiral-shaped gap with the other strand removed therefrom and wind it on the loop by two turns. Further, the starting and finishing ends of the strand are connected together.
Thus, a 3 x 7 x 0.78 (m2 x n x d2) coreless cable bead according to the embodiment 11-1 is produced.

<Embodiment 12-1> 4 x 2 x 1.28 Coreless Cable Bead

(Production of Strand)

Element wires obtained by drawing a brass plated steel wire having a diameter of 4.2 mm and containing 0.7 mass% of C to a diameter of 1.28 mm are wound on two bobbins. Using a tubular type twisting machine, after adjusting their diameter formed ratios to 95%, they are twisted by Z twisting at a twist pitch of 25 mm.
Further, the thus-produced primary twisted materials (1 x 3 x 1.28) are wound by a specific amount on four bobbins. And, using the tubular type twisting machine again, after adjusting their diameter formed ratios to 97%, they are finally twisted by S twisting at a twist pitch of 70 mm, and an original cord is wound on the winding bobbin, thereby producing the original cord.
The respective strands are discharged from the winding bobbin with the original cord wound thereon and, with their finishing ends untwisted manually, they are passed through the perforated board and are guided to a bobbin. The strands crimped by the untwisting device shown in Fig. 5 are wound on the bobbin, thereby providing three strands for producing a coreless cable bead.

(Production of Coreless Cable Bead)

One of the four strands obtained by untwisting the original cord and wound on the bobbin is used. Using the winding device shown in Fig. 7, part of the strand is discharged from the bobbin to form a one-turn loop and the starting end of the discharged strand is provisionally restrained to the loop. Next, while rotating the bobbin holder and bobbin, the loop is rotated in the first and second directions to wind the discharged crimped strand into the spiral-shaped gap with the other strand removed therefrom and wind it on the loop by three turns. Further, the starting and finishing ends of the strand are connected together.
Thus, a 4 x 2 x 1.28 (m2 x n x d2) coreless cable bead according to the embodiment 12-1 is produced.

<Embodiment 13-1> 4 x 3 x 1.05 Coreless Cable Bead

(Production of Strand)

Element wires obtained by drawing a brass plated steel wire having a diameter of 3.6 mm and containing 0.7 mass% of C to a diameter of 1.05 mm are wound on three bobbins. Using a tubular type twisting machine, after adjusting their diameter formed ratios to 96%, they are twisted by Z twisting at a twist pitch of 25 mm.
Further, the thus-produced primary twisted materials (1 x 3 x 1.05) are wound by a specific amount on four bobbins. And, using the tubular type twisting machine again, after adjusting their diameter formed ratios to 97%, they are finally twisted by S twisting at a twist pitch of 65 mm, and an original cord is wound on the winding bobbin, thereby producing the original cord.
The respective strands are discharged from the winding bobbin with the original cord wound thereon and, with their finishing ends untwisted manually, they are passed through the perforated board and are guided to a bobbin. The strands crimped by the untwisting device shown in Fig. 5 are wound on the bobbin, thereby providing four strands for producing a coreless cable bead.

(Production of Coreless Cable Bead)

One of the four strands obtained by untwisting the original cord and wound on the bobbin is used. Using the winding device shown in Fig. 7, part of the strand is discharged from the bobbin to form a one-turn loop and the starting end of the discharged strand is provisionally restrained to the loop. Next, while rotating the bobbin holder and bobbin, the loop is rotated in the first and second directions to wind the discharged crimped strand into the spiral-shaped gap with the other strand removed therefrom and wind it on the loop by three turns. Further, the starting and finishing ends of the strand are connected together.

Thus, a 4 x 3 x 1.05 (m2 x n x d2) coreless cable bead according to the embodiment 13-1 is produced.

<Embodiment 14-1> 1 x 5 x 1.60 Coreless Cable Bead

(Production of Strand)

Element wires obtained by drawing a brass plated steel wire having a diameter of 5.3 mm and containing 0.7 mass% of C to a diameter of 1.60 mm are wound on five bobbins. Using a tubular type twisting machine, after adjusting their diameter formed ratios to 97%, they are twisted by S twisting at a twist pitch of 55.0 mm and are wound on the bobbin, thereby producing an original cord.

The respective strands are discharged from the winding bobbin with the original cord wound thereon and, with their finishing ends untwisted manually, they are passed through the perforated board and are guided to a bobbin. The strands crimped by the untwisting device shown in Fig. 5 are wound on the bobbin, thereby providing five strands for producing a coreless cable bead.

(Production of Coreless Cable Bead)

One of the five strands obtained by untwisting the original cord and wound on the bobbin is used. Using the winding device shown in Fig. 7, part of the strand is discharged from the bobbin to form a one-turn loop and the starting end of the discharged strand is provisionally restrained to the loop. Next, while rotating the bobbin holder and bobbin, the loop is rotated in the first and second directions to wind the discharged crimped strand into the spiral-shaped gap with the other strand removed therefrom and wind it on the loop by four turns. Further, the starting and finish ends of the strand are connected together.

Thus, a 1 x 5 x 1.60 (1 x m1 x d1) coreless cable bead according to the embodiment 14-1 is produced.

<Embodiment 15-1> 5 x 2 x1.15 Coreless Cable Bead

(Production of Strand)

Element wires obtained by drawing a brass plated steel wire having a diameter of 4.2 mm and containing 0.7 mass% of C up to a diameter of 1.15 mm are wound on two bobbins. Using a tubular type twisting machine, after adjusting their diameter formed ratios to 97%, they are twisted by Z twisting at a twist pitch of 17.5 mm.

Further, the thus-produced primary twisted materials (1 x 2 x 1.15) are wound by a specific amount on five bobbins. And, using the tubular type twisting machine again, after adjusting their diameter formed ratios to 93%, they are finally twisted by S twisting at a twist pitch of 70 mm, and an original cord is wound on the winding bobbin, thereby producing the original cord.

The respective strands are discharged from the winding bobbin with the original cord wound thereon and, with their finishing ends untwisted manually, they are passed through the perforated board and are guided to a bobbin. The strands crimped by the untwisting device shown in Fig. 5 are wound on the bobbin, thereby providing five strands for producing a coreless cable bead.

(Production of Coreless Cable Bead)

One of the five strands obtained by untwisting the original cord and wound on the bobbin is used. Using the winding device shown in Fig. 7, part of the strand is discharged from the bobbin to form a one-turn loop and the starting end of the discharged strand is provisionally restrained to the loop. Next, while rotating the bobbin holder and bobbin, the loop is rotated in the first and second directions to wind the discharged crimped strand into the spiral-shaped gap with the other strand removed therefrom and wind it on the loop by four turns. Further, the starting and finishing ends of the strand are connected together.

Thus, a 5 x 2 x 1.15 (m2 x n x d2) coreless cable bead according to the embodiment 15-1 is produced.

<Comparison Example 16-1> 1 x 6 x 1.47 Coreless Cable Bead

(Production of Strand)

Element wires obtained by drawing a brass plated steel wire having a diameter of 5.0 mm and containing 0.7 mass% of C to a diameter of 1.47 mm are wound on six bobbins. Using a tubular type twisting machine, after adjusting their diameter formed ratios to 99%, they are twisted by S twisting at a twist pitch of 60 mm and are wound on the bobbins, thereby producing an original cord.

The respective strands are discharged from the winding bobbin with the original cord wound thereon and, with their finishing ends untwisted manually, they are passed through the perforated board and are guided to a bobbin. The strands crimped by the untwisting device shown in Fig. 5 are wound on the bobbins, thereby providing six strands for producing a coreless cable bead.

(Production of Coreless Cable Bead)

One of the six strands obtained by untwisting the original cord and wound on the bobbins is used. Using the winding device shown in Fig. 7, part of the strand is discharged from the bobbin to form a one-turn loop and the starting end of the discharged strand is provisionally restrained to the loop. Next, while rotating the bobbin holder and bobbin, the loop is rotated in the first and second directions to wind the discharged crimped strand into the spiral-shaped gap with the other strand removed therefrom and wind it on the loop by five turns. Further, the starting and finishing ends of the strand are connected together.

Thus, a 1 x 6 x 1.47 (1 x m1 x d1) coreless cable bead according to the comparison example 16-1 is produced.

<Comparison Example 15-1> 6 x 3 x 0.85 Coreless Cable Bead

(Production of Strand)

Element wires each obtained by drawing a brass plated steel wire having a diameter of 3.0 mm and containing 0.7 mass% of C to a diameter of 0.85 mm is wound on three bobbins. Using a tubular type twisting machine, after adjusting their diameter formed ratios to 96%, they are twisted by Z twisting at a twist pitch of 20 mm.

Further, the thus-produced primary twisted materials (1 x 3 x 0.85) are wound by a specific amount on six bobbins. And, using the tubular type twisting machine again, after adjusting their diameter formed ratios to 93%, they are finally twisted by S twisting at a twist pitch of 70 mm, and an original cord is wound on the winding bobbin, thereby producing the original cord.

The respective strands are discharged from the winding bobbins with the original cord wound thereon and, with their finishing ends untwisted manually, they are passed through the perforated board and are guided to bobbins. The strands crimped by the untwisting device shown in Fig. 5 are wound on the bobbins, thereby providing six strands for producing a coreless cable bead.

(Production of Coreless Cable Bead)

One of the six strands obtained by untwisting the original cord and wound on the bobbins is used. Using the winding device shown in Fig. 7, part of the strand is discharged from the bobbin to form a one-turn loop and the starting end of the discharged strand is provisionally restrained to the loop. Next, while rotating the bobbin holder and bobbin, the loop is rotated in the first and second directions to wind the discharged crimped strand into the spiral-shaped gap with the other strand removed therefrom and wind it on the loop by five turns. Further, the starting and finishing ends of the strand are connected together.

Thus, a 6 x 3 x 0.85 (m2 x n x d2) coreless cable bead according to the embodiment 17-1 is produced.

<Conventional example>

1 x 2.2 + 8 x 1.4 Core-equipped Cable Bead

(Production of Core Ring)

An element wire obtained by drawing a brass plated steel wire having a diameter of 6.0 mm and containing 0.52 mass % of C to a diameter of 2.2 mm is rounded to form a loop having a ring-shaped center diameter of 310 mm, the two ends thereof are butted against each other, and, after welding, burrs are removed therefrom, thereby producing a ring-shaped core material.

(Production of Strand)

An element wire obtained by drawing a brass plated steel wire having a diameter of 5.0 mm and containing 0.7 mass % of C to a diameter of 1.40 mm is wound on a large bobbin. The element wire is suppled from the large bobbin and is wound on an exclusive small bobbin through a correcting roller for line crimping, thereby producing a strand.

(Production of Core-equipped Cable bead)

The core ring is set in a conventional cable bead manufacturing apparatus (see, for example, JPA Publication No. 2008-240223), the strand is supplied from the exclusive small bobbin, the strand is supplied and is pulled out to the core ring, and its starting end is provisionally fixed to the core ring with tape, etc. After then, using the cable bead manufacturing apparatus, while passing a bobbin with the strand wound thereon through the core ring, the bobbin is turned eight times horizontally and at right angles, and, finally, the two ends of the strand are inserted into a cylindrical sleeve and connected together, thereby producing a conventional core-equipped cable bead.

Respectively for the cable beads of the twisted structures according to the embodiments 6-1 ~ 9-1, 11-1 ~ 15-1, comparison examples 1-1 ~ 5-1, 10-1, 16-1, 17-1 and conventional example 1, three kinds of cable beads having different strand diameter formed ratios were produced and were used as samples for various kinds of quality evaluation. The details are as shown in Tables 1 and 2.

(Diameter Formed Ratio)

Here, in Tables 1 and 2, the diameter formed ratio was measured as follows.

After a cable bead was produced, a portion thereof was cut to provide a non-ring-shaped cord. The diameter of the cord was measured at three points in the longitudinal direction and then the cord was untwisted only to a single strand. The crimped height (outside) of the strand was measured at three points in the longitudinal direction and the diameter formed ratio ($\phi$c) of the cable bead was measured by the following equation.

$$(\phi c) = (\text{average crimped height})/(\text{average cord diameter}) \times 100$$

(Uneven Twisting Occurrence Ratio)

In Table 1 and 2, the uneven twisting occurrence ratio was measured as follows.

The cord obtained in order to measure the diameter formed ratio was passed through a dice having a hole of a diameter 1.05 times the cord diameter. When the cord could pass over the whole length, it is determined that it has "no uneven twisting", and when not, it is determined that it has "uneven twisting". This test was repeated fifty times and the ratio of the number of times of no uneven twisting is shown in Table 1 and 2.

(Manufacturing Time)

In Table 1 and 2, the index of the manufacturing time was obtained as follows.

Firstly, the manufacturing time of the conventional cable bead was obtained as follows.

Starting from the time to supply the core material, the time to form the core into a specific ring-shape diameter, the time to butt the two ends against each other, the time to weld them and the time to remove burrs were totaled.

Further, starting from the time to supply the strand, the time to give a specific crimped line (including adjusting time), the time to wind it on the exclusive bobbin, and the time to take it up were totaled.

Moreover, in the core-equipped cable bead manufacturing apparatus, starting the time to set the core material, the time to supply the exclusive bobbin with the strand wound thereon, the time to discharge the strand to the core material, the time for adjustment, and the time to complete the cable bead were totaled.

The sum of the times required in the above steps was determined as the manufacturing time of the conventional cable bead.

The manufacturing times of the coreless cable beads of the embodiments and comparison examples 1 ~ 17 were obtained as follows.

Firstly, in producing the original cord, the time to supply the element wire to the twisting machine, the time to wind the strand on the bobbin and the time to take it up were totaled. In this case, for a double-twisted structure, the primary twisting and final twisting were both counted.

Further, starting the time to supply the finally twisted bobbin to the untwisting machine, the time to wind the strands on the bobbins and the time to take them up were totaled.

Further, in the coreless cable bead manufacturing apparatus, starting from the time to set the bobbin with the strand wound thereon in the supply device and the time to complete the cable bead were totaled.

For the above totaled manufacturing times, after the manufacturing times of the fifteen cable beads were totaled, the totaled times were divided by 15 to calculate the average manufacturing time per cable bead. In Table 1 and 2, while the average manufacturing time of the conventional example is assumed as 100, numeric values obtained by dividing the manufacturing times of the embodiments and comparison examples 1 ~ 17 by those of the conventional example are shown as indexes.

(Average Hardness)

In Table 1 and 2, the average hardness was obtained as follows. The indexes having (a) of the indexes of the conventional example 1, comparison example 1-1, etc. show indexes when the hardness of the rubber surface of a rubber composite using a round rod a of $\phi$5.0 mm is assumed as 100.

Using the embodiments and comparison examples 1 ~ 17 and conventional example, rubber/cable bead composites having a dimeter of 8.3 ~ 10.5 mm (rubber thickness: 2 mm) x a 15 cm length were produced and, the hardness of the rubber surface was measured at 10 points by a durometer/type A according to [JIS K 6253] and the average value thereof is shown by an index. Here, the indexes having (b) of the comparison example 2-1, etc. show indexes when the hardness of the rubber surface of a rubber composite using a round rod b of $\phi$6.0 mm is assumed as 100. Rubber used: rubber for tire (1 mm thickness sheet), vulcanization condition: 150°C x 30 minutes, and vulcanization pressure: 10 kg/cm$^2$.

Table 1

| Production No. | Twist Structure | Original cord Manufacturing Condition | | | | | ※1 Diameter Formed Ratio (%) | Cable Bead | | | ※4 Rubber Surface Average Hardness (Index) of Rubber Composite |
|---|---|---|---|---|---|---|---|---|---|---|---|
| | | Cord Outside Diameter (φmm) | Twist Pitch (mm) | | Diameter Formed Ratio (%) | | | ※2 Uneven Twist Occurrence Ratio | ※3 Manufacturing Time (Index) | | |
| | | | Primary Twist (Z) | Final Twist (S) | Primary Twist | Final Twist | | | | | |
| Comparison Round Rod a | φ5.0 mm | 5.0 | - | - | - | - | - | - | - | | (a) 100 |
| Comparison Round Rod b | φ6.0 mm | 6.0 | - | - | - | - | - | - | - | | (b) 100 |
| Conventional example | 1x2.2+8x 1.4 | 5.0 | - | - | - | - | 100 | 6 | 100 | | (a)98 |
| Comparison Example 1-1 | 1x2x 2.55 | 5.1 | - | 50 | - | 93 | 52 | 0 | 52 | | (a)89 |
| Comparison Example 1-2 | 1x2x 2.55 | 5.1 | - | 50 | - | 88 | 59 | 8 | 59 | | (a)88 |
| Comparison Example 1-3 | 1x2x 2.55 | 5.2 | - | 50 | - | 103 | 55 | 4 | 55 | | (a)89 |
| Comparison Example 2-1 | 2x3x 1.48 | 6.4 | 35 | 65 | 93 | 91 | 67 | 4 | 67 | | (b)85 |
| Comparison Example 2-2 | 2x3x 1.48 | 6.4 | 35 | 66 | 93 | 85 | 70 | 12 | 70 | | (b)84 |
| Comparison Example 2-3 | 2x3x 1.48 | 6.5 | 35 | 64 | 93 | 104 | 69 | 10 | 69 | | (b)85 |
| Comparison Example 3-1 | 2x4x 1.28 | 6.2 | 35 | 65 | 93 | 91 | 69 | 2 | 69 | | (b)86 |
| Comparison Example 3-2 | 2x4x 1.28 | 6.2 | 35 | 66 | 93 | 86 | 73 | 12 | 73 | | (b)85 |
| Comparison Example 3-3 | 2x4x 1.28 | 6.3 | 35 | 65 | 93 | 103 | 70 | 8 | 70 | | (b)86 |

(continued)

| Production No. | Twist Structure | Original cord Manufacturing Condition | | | | | Cable Bead | | | ※ 4 Rubber Surface Average Hardness (Index) of of Rubber Composite |
|---|---|---|---|---|---|---|---|---|---|---|
| | | Cord Outside Diameter | Twist Pitch (mm) | | Diameter Formed Ratio (%) | | ※1 Diameter Formed Ratio (%) | ※2 Uneven Twist Occurrence Ratio | ※3 Manufacturing Time (Index) | |
| | | ($\phi$mm) | Primary Twist (Z) | Final Twist (S) | Primary Twist | Final Twist | | | | |
| Comparison Example 4-1 | 2x5x 1.15 | 6.2 | 38 | 50 | 92 | 91 | 71 | 2 | 71 | (b)87 |
| Comparison Example 4-2 | 2x5x 1.15 | 6.2 | 38 | 51 | 92 | 84 | 75 | 14 | 75 | (b)86 |
| Comparison Example 4-3 | 2x5x 1.15 | 6.3 | 38 | 50 | 92 | 102 | 71 | 4 | 71 | (b)87 |
| Comparison Example 5-1 | 2x7x 0.97 | 5.8 | 40 | 60 | 95 | 91 | 73 | 2 | 73 | (b)88 |
| Comparison Example 5-2 | 2x7x 0.97 | 5.8 | 40 | 61 | 95 | 87 | 76 | 14 | 76 | (b)87 |
| Comparison Example 5-3 | 2x7x 0.97 | 5.8 | 40 | 60 | 95 | 103 | 73 | 2 | 73 | (b)88 |
| Embodiment 6-1 | 1x3x 2.10 | 4.5 | - | 50 | - | 95 | 53 | 2 | 53 | (a)93 |
| Embodiment 6-2 | 1x3x 2.10 | 4.5 | - | 51 | - | 88 | 59 | 8 | 59 | (a)92 |
| Embodiment 6-3 | 1x3x 2.10 | 4.5 | - | 50 | - | 102 | 55 | 6 | 55 | (a)92 |
| Embodiment 7-1 | 3x2x 1.48 | 6.4 | 30 | 70 | 95 | 92 | 68 | 4 | 68 | (b)91 |
| Embodiment 7-2 | 3x2x 1.48 | 6.4 | 30 | 71 | 95 | 87 | 72 | 18 | 72 | (b)90 |
| Embodiment 7-3 | 3x2x 1.48 | 6.5 | 30 | 70 | 95 | 103 | 69 | 10 | 69 | (b)91 |

(continued)

| Production No. | Twist Structure | Original cord Manufacturing Condition | | | | | Cable Bead | | | ※4 Rubber Surface Average Hardness (Index) of of Rubber Composite |
|---|---|---|---|---|---|---|---|---|---|---|
| | | Cord Outside Diameter (φmm) | Twist Pitch (mm) | | Diameter Formed Ratio (%) | | ※1 Diameter Formed Ratio (%) | ※2 Uneven Twist Occurrence Ratio | ※3 Manufacturing Time (Index) | |
| | | | Primary Twist (Z) | Final Twist (S) | Primary Twist | Final Twist | | | | |
| Embodiment 8-1 | 3x3x 1.20 | 5.6 | 25 | 60 | 92 | 99 | 70 | 2 | 70 | (b)92 |
| Embodiment 8-2 | 3x3x 1.20 | 5.6 | 25 | 60 | 92 | 90 | 71 | 4 | 71 | (b)92 |
| Embodiment 8-3 | 3x3x 1.20 | 5.7 | 25 | 60 | 92 | 105 | 73 | 10 | 73 | (b)91 |
| Embodiment 9-1 | 3x4x x 1.05 | 5.5 | 30 | 60 | 94 | 93 | 71 | 2 | 71 | (b)92 |
| Embodiment 9-2 | 3x4x x 1.05 | 5.5 | 30 | 61 | 94 | 83 | 77 | 26 | 77 | (b)91 |
| Embodiment 9-3 | 3x4x 1.05 | 5.5 | 30 | 60 | 94 | 100 | 72 | 2 | 72 | (b)92 |

Table 2

| Production No. | Twist Structure | Original cord Manufacturing Condition | | | | | Cable Bead | | | ※4 Rubber Surface Average Hardness (Index) of Rubber Composite |
|---|---|---|---|---|---|---|---|---|---|---|
| | | Cord Outside Diameter | Twist Pitch (mm) | | Diameter Formed Ratio (%) | | ※1 Diameter Formed Ratio (%) | ※2 Uneven Twist Occurrence Ratio | ※3 Manufacturing Time (Index) | |
| | | ($\phi$ mm) | Primary Twist (Z) | Final Twist (S) | Primary Twist | Final Twist | | | | |
| Comparison Example 10-1 | 3x6 x 0.85 | 5.4 | 33 | 60 | 91 | 96 | 95 | 16 | 76 | (a) 92 |
| Comparison Example 10-2 | 3 x 6 x 0.85 | 5.4 | 33 | 60 | 91 | 87 | 86 | 24 | 80 | (a) 91 |
| Comparison Example 10-3 | 3 x 6 x 0.85 | 5.5 | 33 | 60 | 91 | 104 | 102 | 20 | 77 | (a) 91 |
| Embodiment 11-1 | 3 x 7 x 0.78 | 5.4 | 34 | 60 | 97 | 94 | 93 | 0 | 79 | (a) 93 |
| Embodiment 11-2 | 3 x 7 x 0.78 | 5.4 | 34 | 60 | 97 | 85 | 84 | 10 | 82 | (a) 92 |
| Embodiment 11-3 | 3 x 7 x 0.78 | 5.4 | 34 | 60 | 97 | 102 | 101 | 0 | 78 | (a) 93 |
| Embodiment 12-1 | 4 x 2 x 1.28 | 6.2 | 25 | 70 | 95 | 97 | 96 | 4 | 70 | (b) 91 |
| Embodiment 12-2 | 4 x 2 x 1.28 | 6.2 | 25 | 70 | 95 | 86 | 86 | 22 | 74 | (b) 90 |
| Embodiment 12-3 | 4 x 2 x 1.28 | 6.3 | 25 | 70 | 95 | 105 | 104 | 14 | 72 | (b) 90 |
| Embodiment 13-1 | 4 x 3 x 1.05 | 5.5 | 25 | 65 | 96 | 97 | 96 | 4 | 71 | (b) 93 |
| Embodiment 13-2 | 4 x 3 x 1.05 | 5.5 | 25 | 65 | 96 | 87 | 86 | 12 | 72 | (b) 92 |

(continued)

| Production No. | Twist Structure | Original cord Manufacturing Condition | | | | | | Cable Bead | | | |
|---|---|---|---|---|---|---|---|---|---|---|---|
| | | Cord Outside Diameter (φ mm) | Twist Pitch (mm) | | Diameter Formed Ratio (%) | | | ※1 Diameter Formed Ratio (%) | ※2 Uneven Twist Occurrence Ratio | ※3 Manufacturing Time (Index) | ※4 Rubber Surface Average Hardness (Index) of Rubber Composite |
| | | | Primary Twist(Z) | Final Twist (S) | Primary Twist | Final Twist | | | | | |
| Embodiment 13-3 | 4 x 3 x 1.05 | 5.5 | 25 | 65 | 96 | 101 | | 100 | 4 | 71 | (b) 94 |
| Embodiment 14-1 | 1 x 5 x 1.60 | 4.3 | - | 55 | - | 97 | | 97 | 4 | 55 | (a) 95 |
| Embodiment 14-2 | 1 x 5 x 1.60 | 4.3 | - | 55 | - | 90 | | 90 | 6 | 56 | (a) 95 |
| Embodiment 14-3 | 1 x 5 x 1.60 | 4.4 | - | 55 | - | 103 | | 102 | 12 | 57 | (a) 94 |
| Embodiment 15-1 | 5 x 2 x 1.15 | 6.2 | 17.5 | 70 | 97 | 93 | | 93 | 6 | 71 | (b) 92 |
| Embodiment 15-2 | 5 x 2 x 1.15 | 6.2 | 17.5 | 70 | 97 | 85 | | 85 | 24 | 75 | (b) 91 |
| Embodiment 15-3 | 5 x 2 x 1.15 | 6.2 | 17.5 | 70 | 97 | 100 | | 99 | 6 | 71 | (b) 92 |
| Comparison Example 16-1 | 1 x 6 x 1.47 | 4.4 | - | 60 | - | 99 | | 99 | 32 | 76 | (a) 95 |
| Comparison Example 16-2 | 1 x 6 x 1.47 | 4.4 | - | 60 | - | 89 | | 89 | 22 | 75 | (a) 96 |
| Comparison Example 16-3 | 1 x 6 x 1.47 | 4.4 | - | 60 | - | 101 | | 101 | 38 | 77 | (a) 94 |

(continued)

| Production No. | Twist Structure | Original cord Manufacturing Condition | | | | | Cable Bead | | | ※4 Rubber Surface Average Hardness (Index) of Rubber Composite |
|---|---|---|---|---|---|---|---|---|---|---|
| | | Cord Outside Diameter | Twist Pitch (mm) | | Diameter Formed Ratio (%) | | ※1 Diameter Formed Ratio (%) | ※2 Uneven Twist Occurrence Ratio | ※3 Manufacturing Time (Index) | |
| | | (φ mm) | Primary Twist (Z) | Final Twist (S) | Primary Twist | Final Twist | | | | |
| Comparison Example 17-1 | 6 x 3 x 0.85 | 5.4 | 20 | 70 | 96 | 93 | 92 | 36 | 80 | (a) 92 |
| Comparison Example 17-2 | 6 x 3 x 0.85 | 5.4 | 20 | 70 | 96 | 89 | 88 | 24 | 79 | (a) 93 |
| Comparison Example 17-3 | 6 x 3 x 0.85 | 5.4 | 20 | 70 | 96 | 101 | 99 | 42 | 82 | (a) 92 |

Tables 1 and 2 show that the embodiments 6 ~ 9 and 11 ~ 15, while reducing manufacturing time, can restrict uneven twisting occurrence when compared with the conventional examples.

Here, the present invention is not limited to the above embodiments but contains all changes falling within the scope of the patent claims and also within meanings and scopes equivalent to the scope of the patent claims.

This application is based on the Japanese Patent Application No. 2014-137729, filed on July 3, 2014 and thus the contents thereof are incorporated herein for reference.

Industrial Applicability

The present invention provides a cable bead which can be manufactured in a short time and is hard to cause uneven twisting.

Description of Reference Numerals and Signs

| | |
|---|---|
| 1: | Cable bead |
| 2: | Strand |
| 2a: | Starting end |
| 2b: | Finishing end |
| 3: | Sleeve |
| 4: | Original cord |
| 5: | Schematic outer peripheral surface |
| 6: | Cavity |
| 7: | Loop |
| 8: | Extra-strength part |
| 9: | Gap part |
| 10: | Housing |
| 11: | Bobbin |
| 12: | Perforated board |
| 12a: | Hole |
| 13: | Twisting opening |
| 14: | Winding bobbin |
| 15: | Cutter |
| 20: | Winding device |
| 21: | First roller pair |
| 22: | Second roller pair |
| 23: | Winding guide |
| 24: | Ring shape maintaining guide |
| 25: | Strand guide |
| Ax: | Rotation axis |
| Ln: | Loop forming length |

**Claims**

1. A coreless ring-shaped cable bead, wherein a single strand crimped so as to have a 1 x m1 x d1 single-twisted structure or a m2 x n x d2 double-twisted structure is wound into a spiral-shaped gap part for storing (m1 - 1) or (m2 - 1) crimped strands having the above structure and is wound by m1 or m2 turns, and also wherein m1, m2 and n satisfy the following equation: that is, $3 \leq m1 \leq 5$, $3 \leq m2 \leq 5$, $2 \leq n \leq 5$, and n=7(1+6), 11(3+8) or 12(3+9), where m1: number of twists having the single-twisted structure, d1: diameter of filament constituting the single-twisted structure, m2: number of final twists having the double-twisted structure, n: number of primary twists having the double-twisted structure, and d2: diameter of filament constituting the double-twisted structure.

2. The cable bead according to Claim 1, wherein, in the double-twisted structure of an original cord, the diameter formed ratio of the strand given by the following equation is 89% to 101%, that is, $\phi(\%) = Hs/Dc \times 100$, where $\phi$: the diameter formed ratio (%) of the strand, Hs: the height (mm) of the wave of the strand when the original cord is no-load untwisted, and Dc: the outside diameter (mm) of the original cord.

**EP 3 165 670 A1**

3. The cable bead according to Claim 1 or 2, wherein the two ends of the single crimped strand are inserted into a cylindrical sleeve and are connected together therein.

4. A method for manufacturing a cable bead, comprising the steps of: supplying multiple filaments to a twisting machine and, after the strand is adjusted by a pre-forming device and/or a post-forming device so as to have a diameter formed ratio of 89 ~ 101%, twisting them together to produce an original cord; untwisting the original cord by the strands and winding the crimped strands one by one around the winding axis of a bobbin; discharging part of one of the crimped strands from the bobbin to form a one-turn loop, and provisionally restricting the starting end of the single crimped strand to the loop; rotating the bobbin around an axis crossing the winding axis in the same direction of the spiral rotation direction of the crimped strand when the loop is viewed from the bobbin to torsionally discharge the single crimped strand, and rotating the loop in the peripheral direction to wind the single discharged crimped strand into a spiral-shaped gap part with the other strand removed therefrom and winding it on the loop by (the number of strands constituting the original cord - 1) turns; and, connecting together the starting and finishing ends of the strand.

25

[Fig.1]

[Fig.2]

[Fig.3]

(a)

(b)

[Fig.4]

[Fig.5]

[Fig.6]

EP 3 165 670 A1

[Fig.7]

[Fig.8]

(a)

(b)

(c)

[Fig.9]

[Fig.10]

(a)

(b)

## INTERNATIONAL SEARCH REPORT

| International application No. |
| --- |
| PCT/JP2015/067906 |

**A. CLASSIFICATION OF SUBJECT MATTER**
*D07B1/18*(2006.01)i, *B29D30/48*(2006.01)i, *B60C15/04*(2006.01)i, *D07B1/06*(2006.01)i

According to International Patent Classification (IPC) or to both national classification and IPC

**B. FIELDS SEARCHED**

Minimum documentation searched (classification system followed by classification symbols)
D07B1/00-9/00, B29D30/48, B60C15/00-15/05

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho    1971-2015   Toroku Jitsuyo Shinan Koho   1994-2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2010-209504 A (Sumitomo (SEI) Steel Wire Corp.), 24 September 2010 (24.09.2010), paragraphs [0014], [0019] to [0020], [0030], [0063] to [0064]; fig. 1 to 10 (Family: none) | 1-4 |
| Y | JP 9-273088 A (The Yokohama Rubber Co., Ltd.), 21 October 1997 (21.10.1997), claims; fig. 1 to 2 (Family: none) | 1-3 |
| Y | JP 2000-62410 A (Bridgestone Corp.), 29 February 2000 (29.02.2000), claims; paragraphs [0059] to [0061] & US 6186205 B1        & EP 916521 A2 & DE 69833169 D       & ES 2255136 T | 1-3 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search      02 September 2015 (02.09.15) | Date of mailing of the international search report      15 September 2015 (15.09.15) |
| --- | --- |
| Name and mailing address of the ISA/      Japan Patent Office      3-4-3,Kasumigaseki,Chiyoda-ku,      Tokyo 100-8915,Japan | Authorized officer      Telephone No. |

Form PCT/ISA/210 (second sheet) (July 2009)

**36**

**INTERNATIONAL SEARCH REPORT**

| International application No. |
| --- |
| PCT/JP2015/067906 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 5-132881 A (Kunio ICHIKAWA), 28 May 1993 (28.05.1993), claims; paragraph [0018]; fig. 1, 2, 7 (Family: none) | 3,4 |
| Y | WO 2008/029857 A1 (Sumitomo (SEI) Steel Wire Corp.), 13 March 2008 (13.03.2008), paragraph [0084]; fig. 13 & US 2009/0088278 A1 & WO 2008/029857 A1 & DE 112007002022 T & CN 101360861 A & KR 10-2009-0047384 A | 3,4 |
| Y | JP 2010-249310 A (Sumitomo (SEI) Steel Wire Corp.), 04 November 2010 (04.11.2010), claims; paragraphs [0014], [0035], [0045] to [0052], [0064] to [0065], [0075], [0079] to [0080]; fig. 2, 4, 9 (Family: none) | 4 |
| Y | JP 1-156585 A (Sumitomo Electric Industries, Ltd.), 20 June 1989 (20.06.1989), page 2, upper right column, lines 10 to 13; lower right column, lines 13 to 14; page 3, lower left column, line 6; page 4, upper left column, lines 11 to 12; fig. 1 (Family: none) | 4 |
| Y | JP 7-90784 A (Sumitomo Electric Industries, Ltd.), 04 April 1995 (04.04.1995), paragraphs [0001], [0025]; paragraph [0040], table 1; paragraph [0043]; fig. 1 (Family: none) | 4 |
| Y | JP 5-230780 A (Sumitomo Electric Industries, Ltd.), 07 September 1993 (07.09.1993), paragraphs [0002], [0020] to [0021] & US 5287691 A | 4 |
| Y | JP 2009-241923 A (Sumitomo (SEI) Steel Wire Corp.), 22 October 2009 (22.10.2009), paragraphs [0032], [0037] to [0038]; fig. 3 & US 2010/0200143 A1 & WO 2009/113641 A1 & EP 2179870 A1 & KR 10-2010-0025008 A & CN 101784403 A | 4 |

Form PCT/ISA/210 (continuation of second sheet) (July 2009)

**INTERNATIONAL SEARCH REPORT**

International application No.

PCT/JP2015/067906

C (Continuation). DOCUMENTS CONSIDERED TO BE RELEVANT

| Category* | Citation of document, with indication, where appropriate, of the relevant passages | Relevant to claim No. |
|---|---|---|
| A | JP 2010-242277 A (Sumitomo (SEI) Steel Wire Corp.), 28 October 2010 (28.10.2010), entire text; all drawings & WO 2010/106875 A1 | 1-4 |
| A | JP 2013-151198 A (Sumitomo Rubber Industries, Ltd.), 08 August 2013 (08.08.2013), entire text; all drawings & US 2013/0186542 A1 & CN 103213460 A & KR 10-2013-0086306 A | 1-4 |
| A | JP 2011-202321 A (Sumitomo (SEI) Steel Wire Corp.), 13 October 2011 (13.10.2011), entire text; all drawings (Family: none) | 1-4 |
| A | JP 4-194091 A (Toko Shizai Kabushiki Kaisha), 14 July 1992 (14.07.1992), page 1, lower right column, line 6 to page 2, upper left column, the last line (Family: none) | 1-4 |

Form PCT/ISA/210 (continuation of second sheet) (July 2009)

**INTERNATIONAL SEARCH REPORT**

International application No.

PCT/JP2015/067906

Claims 1 and 3:

Claims 1 and 3 include a cable bead which employs reformed strand members having an arbitrary set-height/diameter ratio.

However, although the problem to be addressed by the present application is to provide a cable bead which is manufactured in a short time and resistant to twist variations (paragraphs [0007], [0010], and [0086]), Table 1 of paragraph [0084] and Table 2 of paragraph [0085] in the specification of the present application show that a cable bead which does not take on a set-height/diameter ratio of a particular value will have a rate of occurrence of twist variations that exceeds that of the conventional example even if the cable bead has a twist structure that satisfies the structure identified by claim 1 (e.g., see a number of embodiments such as 6-2, 7-2, and 7-3). Thus, what is disclosed within the meaning of PCT Article 5 is only those that take on a set-height/diameter ratio of a particular value, and claims 1 and 3 are not fully supported within the meaning of PCT Article 6.

Therefore, the international search was conducted on those that are disclosed and supported in the specification, that is, the cable beads that take on a set-height/diameter ratio of a value identified by claim 2.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09273088 A
- JP H0768662 A
- JP 2008240223 A
- JP 2014137729 A